# EUROPEAN PATENT SPECIFICATION

(11) **EP 4 259 976 B1**
(45) Date of publication and mention of the grant of the patent: **17.07.2024**
(21) Application number: 22773107.2
(22) Date of filing: 29.07.2022
(51) Int. Cl.: F24D 3/14

(54) **A HEATING WALL PANEL AND A CORNER ELEMENT FOR MASKING AN EDGE OF A HEATING WALL PANEL**
HEIZWANDPLATTE UND ECKELEMENT ZUR MASKIERUNG EINER KANTE EINER HEIZWANDPLATTE
PANNEAU DE MUR CHAUFFANT ET ÉLÉMENT DE COIN DE MASQUAGE DE BORD DE PANNEAU DE MUR CHAUFFANT

(30) Priority: 04.03.2022 PL 44055922
(43) Date of publication of application: 18.10.2023
(73) Proprietor: Senko, Oleksandr, 47-180 Siedlec (PL)
(72) Inventor: Senko, Oleksandr, 47-180 Siedlec (PL)
(74) Representative: Kancelaria Eupatent.pl Sp. z.o.o
(86) International application number: PCT/EP2022/071373
(87) International publication number: WO 2023/165726

(56) References cited:
- EP-A1- 3 502 574
- EP-A2- 0 047 633
- EP-A2- 1 630 479
- EP-A2- 2 330 358
- GB-A- 2 482 650

## Description

### TECHNICAL FIELD

The object of the present invention is a heating wall panel, in particular for drywall structures, and a corner element for masking an edge of a heating wall panel.

### BACKGROUND

There are known modular drywall structures, which consist of gypsum-cellulose boards fixed to a wooden structure. A five-layer modular pipe is integrated inside the board and forms a heating loop.

There are also known modular panels made of gypsum fiber boards having embedded multilayer pipes of a 10 mm diameter and an aluminum spacer. The multilayer pipes are factory-installed in grooves of the panel. Such modular panels are mounted with the smooth side facing the room. After the joints and openings are filled, they can be painted, wallpapered or covered with a thin layer of plaster.

Examples of modular patent structures are known from Polish patent applications PL397667 and PL405037. Further heating wall panels are known from EP0047633A2, GB2482650A, EP2330358A2 and EP 3502574A1 .EP1630479A2 discloses a heating or cooling system comprising a self-supporting sandwich panel formed from a plastic core having on either side a strengthening layer comprising a reinforced adhesive layer, where channels are arranged in strengthening layers and plastic core, and where the panel can be arranged on wall, floor and/or ceiling of space; and fluid conduits arranged in the channels of the panel and which can be connected to a central heating unit for transporting a relatively hot or cool fluid along the conduits in order to respectively heat or cool the space.

### SUMMARY

There is a need for providing an alternative structure of a heating wall panel, in particular suitable for drywalls.

In one aspect, the invention relates to a heating wall panel comprising a first board and a second board adjacent to the first board. Within the first board there are installed: a heating line arranged in two layers in a manner coplanar with two outer surfaces of the first board, wherein the heating line in the first layer is arranged in a form of a meander and has a length greater than in the second layer; an cold water line and a hot water line arranged one above another and fixed by means of tees to ends of the heating line; and an upper electrical installation duct and a lower electrical installation duct extending from a first side to a second side of the first board between the first layer and the second layer of the heating line. The second board comprises: in the lower part of the second board at the sides of the second board, inspection hatches having a form of board fragments delimited from the rest of the board surface by hatch indentations made in the surface of the second board that is adjacent to the first board; and at a distance from the longer edges of the second board and in parallel to the longer edges of the second board, side indentations made in the surface of the second board that is adjacent to the first board.

The heating wall panel according to the invention is a prefabricated modular element having embedded heating line and may be conveniently combined with adjacent panels to form a single heating system, therefore the panels can be quickly installed.

The panel is designed for indoor installation such that the first board faces a room and the second board faces a wall.

Preferably, the entire panel has dimensions of its main plane that correspond to drywall panels typically used in a particular construction system (e.g. plasterboards having standard dimensions (width w x height h) equal to 120 x 260 cm), which allows the panel to fit into a typical drywall construction. Consequently, the panel is compatible with typical drywall systems.

If the heating wall panel is to be used in a room having a height greater than the panel height h, the space between the panel and the ceiling of the room may be filled with an auxiliary panel consisting of only plain first and second board, having thicknesses corresponding to the thicknesses d1, d2 of the boards of the heating wall panel.

The first board should be made of a material that provides a possibly high strength and thermal insulation - for example, it may be a polyisocyanurate (PIR) board, a polyurethane (PUR) board, a polystyrene board etc. Moreover, the first board may be covered with a protective coating on one or both sides, for example, with an aluminum foil. The first board should have a thickness d1 suitable for the installation of both layers of the heating line with some distance d3 between these layers. For example, the first board may have a thickness d1 equal from 30 to 150 mm, for example 50 mm (for example, when the heating line having a diameter equal to 10 mm is installed therein).

The second board should be made of a material typically used for covering the interior of utility rooms (residential or non-residential), for example it may be a plasterboard, a cement-bonded chipboard, an oriented strand board (OSB) or any other material for wall cladding. The second board should therefore have a thickness d2 corresponding to typical boards made from the type of material of the second board, so that the panel according to the invention can be easily integrated with other standard elements of a drywall. For example, the second board may have a thickness d2 equal from 5 to 30 mm, for example equal to 12.5 mm.

If the second board has no recesses for the heating line (which are made only in the first board), the panel has an outer layer formed by the first board that maintains its strength parameters in accordance with the standard parameters of the material from which the second board is made. This minimizes the risk of cracks in the second board layer. It also improves the technology of producing the heating wall panels, as all the recesses are made in the first board.

It is advisable to install the heating panel at a short distance from the wall of the building, for example at the distance of 1cm. As a result, the heating line located in the second layer heats the air in the space between the panel (i.e. its first board) and the wall of the building. Consequently, the air in that entire space is evenly heated and also the entire plane of the wall is evenly heated (and not only its lower part to the height at which the heating line is laid). This minimizes the risk of deformations of the panel along its height, since a substantially uniform temperature distribution is achieved over the surface of the panel.

The side edges of the panel at the surface of the second board may be shaped in a manner equivalent to the shapes of standard drywall panels made of the material from which the second board is made, so as to enable the installation of the panel to be finished (e.g. sealing connections to adjacent panels, top and bottom edges finishing) in accordance with standard technologies, e.g. for plasterboards.

The two-layer heating line has a shape that allows to heat both the wall of the building and the room. The first layer, in which the length of the line is greater, is located at the side of the second board so that most of the heat is dissipated into the room. It is advisable to connect the end of the first layer of the heating line to the hot water line so that the heat is first dissipated towards the room.

The heating line is located in the first board so that the outer surface the of first layer is coplanar with the front surface of the first board, and the outer surface of the second layer is coplanar with the back surface of the first board, so that the heating line is as close as possible to the outer surface heated by it, i.e. to the surface of the second board or to the surface of the wall, respectively.

Due to the fact that the second layer of the heating line is applied at the side of the wall, it is possible to transfer some heat towards the wall, which eliminates water condensation between the panel and the wall of the building. The loops of the meander of the heating line in both layers may be distributed evenly, i.e. with a constant distance h5 between the neighboring loops of the first layer, or unevenly, for example so that the distance h5 between the neighboring loops is greater at the bottom of the panel than at the top of the panel. The distance h5 between the adjacent loops of the heating line in the first layer may be equal from 50 to 150 mm, for example 100 mm. For example, for every two loops of the heating line in the first layer, there may be one loop of the heating line in the second layer. Generally, the ratio of the length of the heating line in the first layer to the length of the heating line in the second layer may be equal from 1.1:1 to 20:1, for example about 2:1.

Due to the fact that the heating surface of the second layer of the heating line is smaller than the heating surface of the first layer, less heat is transferred to the wall than to the room. Generally, the amount of heat dissipated towards the wall should be only enough to allow the air behind the panel to be warmed up so that there is no dew point there.

The heating line in the second layer should preferably have horizontal meander sections arranged at the same height as the horizontal meander sections of the first layer (but not every horizontal section of the first layer has to be followed by a horizontal section of the second layer). This makes it easy to detect a location of the line segments, for example in order to check whether it is safe to install a mounting element into a particular place of the panel. The position of the heating line in the first layer within the panel may be easily identified by introducing a hot thermal medium into the heating line and checking the positions at which the panel heats up.

The heating line may be made of a cross-linked polyethylene (PEX) pipe, a polybutylene (PB) pipe, or other material suitable for heating lines.

The hot water line and the cold water line may be made of a PEX pipe, a PB pipe, or other material suitable for heating lines. They should be installed at a height corresponding to other elements of the heating system within the building, for example the cold water line may be installed at a height h1 equal to 100 mm.

The heating line may be arranged only up to a certain height h4 of the panel, for example only up to the height h4 equal to 2.30 m, and the top part of the panel may have no heating line therein, if it is not necessary to heat the room along its entire height. Alternatively, the heating line may be arranged on the whole surface of the first board, i.e. essentially along its whole height h.

Preferably, the tees are located at one side of the panel so that their connection ends are flush with the side edge of the panel, and the cold water line and the hot water line may extend beyond the opposite side of the panel by a distance that allows them to be connected with the tees of an adjacent panel.

It is preferable for the cold and hot water lines to be made in a technology that enables them to be pressed into the tees of an adjacent panel without the need for gluing or welding. However, other connection methods may also be used, for example such as by gluing or welding.

The inspection hatches are useful in an event of a failure, for example in the event of a water leak at the tee joint, so as to allow easy access to the space around the tee in the particular board and to the neighboring space of the adjacent board in order to fix the connection. The inspection hatches are preferably connected with the board such that an indentation is made in the board material, which allows a portion of the board to be temporarily removed along the indentation line (for example, by cutting the board material from the other side only to the depth that allows to reach the milling line on the opposite side). The indentation may be made in a form of a milling line or a cut line having a depth corresponding to almost the entire thickness of the board.

Electrical installation ducts enable to pass electrical installation wires along the panel. The electrical installation ducts are preferably located horizontally at heights h2, h3, at which electrical components are typically installed. The lower duct is located at a level of installation of electrical sockets (for example, its lower edge is at the height h2 equal to 350 mm), and the upper duct is located at a level of installation of electrical switches (for example, its lower edge is at the height h3 equal to 1100 mm). The electrical installation ducts may have a form of a closed profile with a circular or rectangular cross-section. For example, the electrical installation ducts may be made of a closed plastic profile. The electrical installation ducts may be lined with a plastic tray that protects the material of the first board from damage.

The side indentations of the second board, made as millings or cuts having a depth corresponding to almost the entire thickness of the second board, enable removing a side fragment of the second board in order to install a corner element aside the panel or to connect the panel with other elements of a drywall system. The distance w1 can be equal from 50 to 200 mm, for example 100 mm.

Preferably, he first board is a polyisocyanurate (PIR) board. The PIR board is particularly advantageous as the first board because it is strong, lightweight, has a low thermal conductivity and, moreover, has a high fire resistance.

Preferably, the second board is a plasterboard. Making the second board of a plasterboard has the advantage that the heating wall panels are compatible with standard drywall plasterboard systems.

Preferably, individual loops of the heating line have straight sections running in parallel to the shorter edge of the panel. Consequently, it is easy to determine a location of the heating line, as the sections of adjacent panels are located at the same height. This makes it easier to make openings for mounting elements in the panel without a risk of damaging the heating line. The straight sections should be distanced from the electrical installation duct to allow easy access to the electrical cables running in the electrical installation duct without the risk of damaging the heating line.

Preferably, the first board is attached to the second board by means of an adhesive. Consequently, both boards of the panel are permanently connected with each other, constituting a prefabricated heating module for direct installation on a wall of a room.

In another aspect, the invention relates to a heating wall panel comprising a plasterboard, characterized in that it is formed by a heating water line arranged in two layers in a shape of a meander, so that its successive sections are parallel to each other, wherein the first layer of the heating line is arranged more densely than the second layer, and between the layers there is an upper electrical installation duct and a lower electrical installation duct parallel to the upper electrical installation duct, wherein the ends of the heating line are fixed to tees and, located one above another, to which a cold water line of a heating system and a hot water line of the heating system are connected, wherein the heating line, the upper electrical installation duct, the lower electrical installation duct, the tees, are entirely embedded in a PIR-type insulation board and flush with its surface, wherein the PIR-type insulation board is permanently bonded by means of an adhesive with the plasterboard having dimensions corresponding to the dimensions of the PIR-type insulation board, wherein the plasterboard has, in its lower part on both sides, inspection hatches milled on the edges, while the indentations of the board surface along the two edges of the hatches enable their disassembly in the event of a failure, and the millings and cuts along the longer edges of the board allow the panel to be adjusted to wall bends.

Preferably, the upper electrical installation duct, the lower electrical installation duct, the cold water line of a heating system and the hot water line of the heating system are located in the PIR type insulation board in parallel to each other and to its shorter edge, wherein the cold water line of the heating system is located at a distance equal to 100 mm from the lower shorter edge, and the upper electrical installation duct is located at a distance equal to 1100 mm from the lower shorter edge.

Preferably, the distances between the sections of the first layer of the heating line are equal to each other and are equal to 100 mm.

In yet another aspect, the invention relates to a corner masking element comprising two boards permanently connected with each other along their longer edges at a right angle, wherein along the entire length of their connection, at inner side of the corner element, a cuboid beam is fixed to the boards, and wherein two hydraulic elbows and are arranged one above another in the lower part of the cuboid beam. Such element is particularly suitable for connecting heating wall panels according to the invention and for masking their connection when the panels are positioned at an outer corner of the wall. The beam may be made of the same material as the first board of the heating wall panels, preferably made of polyisocyanurate (PIR). The boards may be made of the same material as the second board of the heating wall panel, preferably made of plasterboard. The elbows are configured to connect the hot and cold water lines of the heating system.

In yet another aspect, the invention relates to a corner for masking an edge of the heating wall panel characterized in that it is made of two plasterboards permanently connected with each other along milled edges at a right angle, and along the entire length of the connection of the plates, there is fixed a cuboid element made of a PIR-type insulation board, wherein in its lower part two hydraulic elbows and are arranged parallel to each other.

### BRIEF DESCRIPTION OF DRAWINGS

The object of the invention is presented by means of example embodiments on a drawing, wherein:

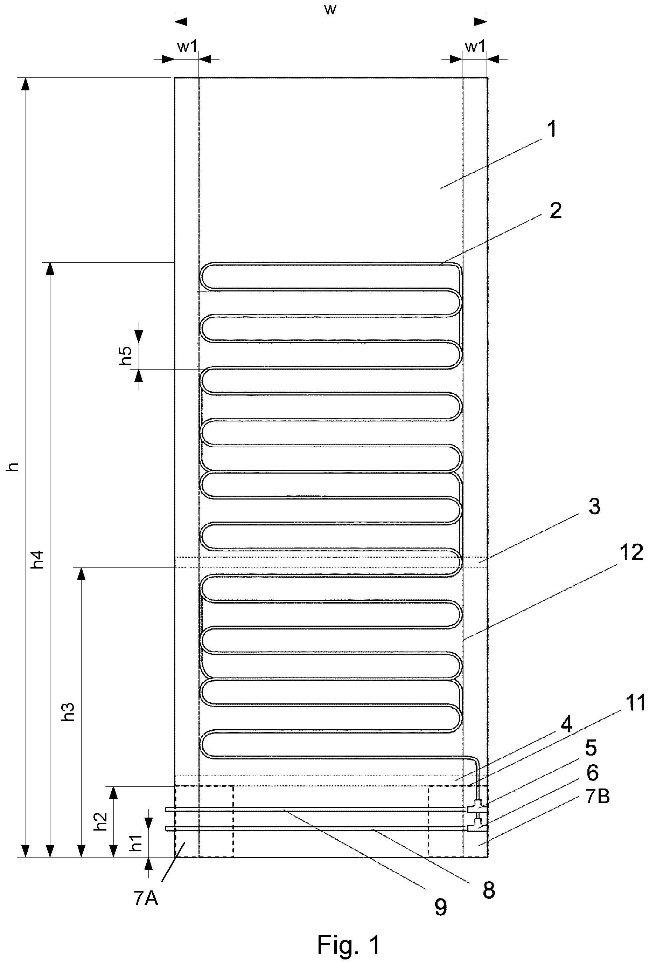

Fig. 1 shows an embodiment of a heating wall panel in a front view;

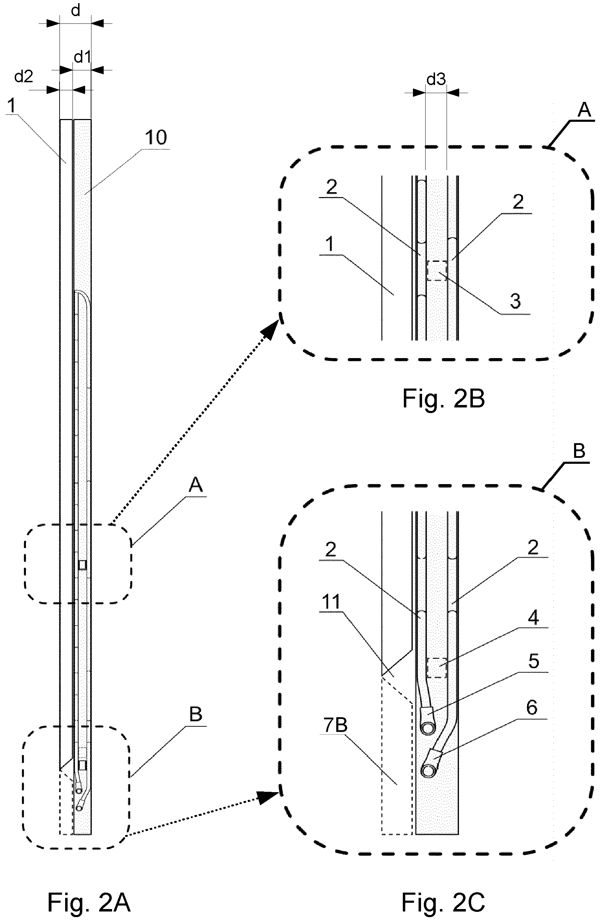

Fig. 2A-2C show the embodiment of the heating wall panel in a side view with enlarged views of its characteristic elements (view A, view B);

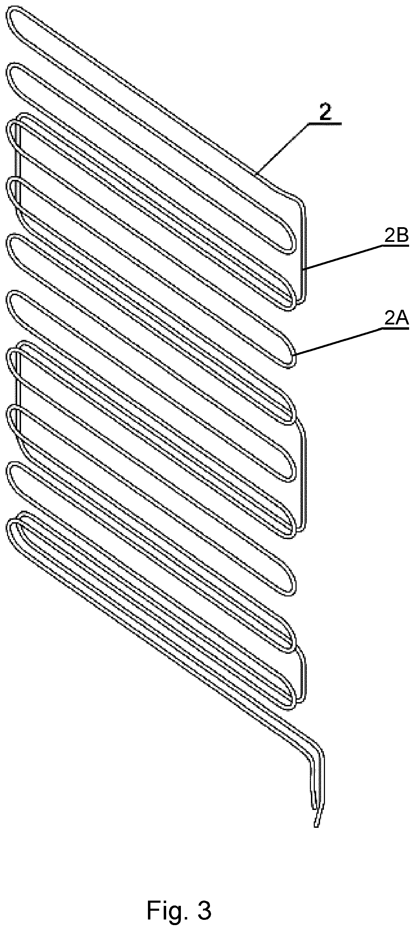

Fig. 3 shows an example of a shape of a heating line;

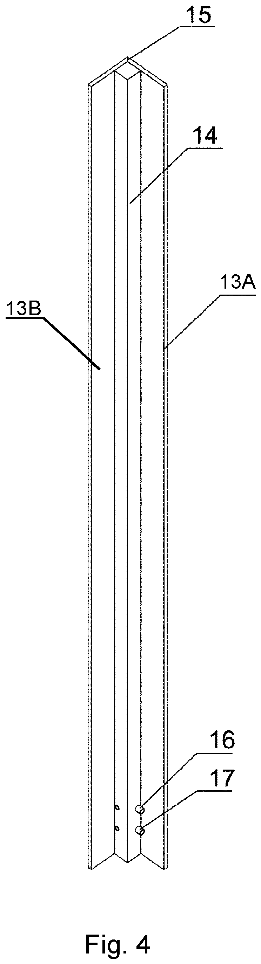

Fig. 4 presents an embodiment of a corner element for masking an edge of a heating wall panel.

### DETAILED DESCRIPTION OF EMBODIMENTS

### Example embodiment of a heating wall panel

The heating wall panel comprises a plasterboard (such as a gypsum plaster sandwiched between two layers of paper) as a second board 1. The panel further comprises a heating water line 2 arranged in two layers, in a meander-like shape in each layer, so that successive sections of the line are parallel to each other and a distance between the successive sections in the first layer 2A is 100 mm. The heating line 2 in first layer 2A is arranged more densely than in the second layer 2B. Two electrical installation ducts are arranged between the layers 2A, 2B: an upper electrical installation duct 3 and a lower electrical installation duct 4 that is parallel to the upper electrical installation duct 3. The ends of the heating line 2 are permanently connected to tees 5 and 6, located one above another, to which a cold water line 8 of a heating system and a hot water line 9 of the heating system are connected, respectively. The heating line 2, the upper electrical installation duct 3, the lower electrical installation duct 4 and the tees 5, 6 are fully embedded in dedicated grooves in a polyisocyanurate (PIR) insulation board as the first board 1, such that their external faces are coplanar with a corresponding main face of the first board 1. The PIR insulation board 10 is glued to the plasterboard 1. The dimensions of the insulation board 10 correspond to the dimensions of the plasterboard 1. The plasterboard 1 further comprises, in its lower part, at both sides thereof, inspection hatches 7A, 7B, wherein the sides of the hatches 7A, 7B are defined by two cuts/millings 11 in the surface of the plasterboard 1. The hatches 7A, 7B enable disassembly of the plasterboard 1 in case of a failure. Furthermore, millings/cuts 12 along longer edges of the plasterboard 1 allow panel to be configured to be connected with a masking corner (after removing the part of the board 1 between the milling 12 and the side edge, so that a board 13A, 13B of the corner masking element is installed in place of the removed fragment). The upper electrical installation duct 3, the lower electrical installation duct 4, the cold water line 8 of the heating system and the hot water line 9 of the heating system are located in the PIR insulation board 10 in dedicated grooves in parallel to each other and to the shorter edge of the board 10. The cold water line 8 of the heating system is located 100 mm from the lower shorter edge of the panel, the lower electrical installation duct 4 is located 350 mm from the lower shorter edge of the panel, and the upper electrical installation duct 3 is located 1100 mm from the lower shorter edge of the panel.

### Example embodiment of a corner masking element

The corner masking element for masking an edge of the heating wall panel is made of two plasterboards 13A, 13B fixed to each other by glue along milled edges 15 at a right angle. Along the entire length of the connection of the boards 13A, 13B, there is glued a cuboid element 14 made of a PIR insulation board. In the lower part of the element 14 there are arranged two hydraulic elbows 16 and 17 that are parallel to each other.

Although the invention is presented in the drawings and the description and in relation to its embodiments, these embodiments do not restrict or limit the presented invention. It is therefore evident that changes, which come within the meaning and range of equivalency of the essence of the invention, may be made. The presented embodiments are therefore to be considered in all aspects as illustrative and not restrictive. According to the abovementioned, the scope of the invention is not restricted to the presented embodiments but is indicated by the appended claims.

## Claims

1. A heating wall panel comprising:
- a first board (10);
- a second board (1) adjacent to the first board (10);
- wherein within the first board (10) there are installed:
- a heating line (2) arranged in two layers (2A, 2B) in a manner coplanar with two outer surfaces of the first board (10), wherein the heating line (2) in the first layer (2A) is arranged in a form of a meander and has a length greater than in the second layer (2B);
- an cold water line (8) and a hot water line (9) arranged one above another and fixed by means of tees (5, 6) to ends of the heating line (2); and
- an upper electrical installation duct (3) and a lower electrical installation duct (4) extending from a first side to a second side of the first board (10) between the first layer (2A) and the second layer (2B) of the heating line (2);
- and wherein the second board (1) comprises:
- in the lower part of the second board (1) at the sides of the second board (1), inspection hatches (7A, 7B) having a form of board fragments delimited from the rest of the board surface by hatch indentations (11) made in the surface of the second board (1) that is adjacent to the first board (10); and
- at a distance (d) from the longer edges of the second board (1) and in parallel to the longer edges of the second board (1), side indentations (12) made in the surface of the second board (1) that is adjacent to the first board (10).

2. The heating wall panel according to claim 1, wherein the first board (10) is a polyisocyanurate (PIR) board.

3. The heating wall panel according to claim 1 or 2, wherein the second board (1) is a plasterboard.

4. The heating wall panel according to any of previous claims, wherein individual loops of the heating line (2) have straight sections running in parallel to the shorter edge of the panel.

5. The heating wall panel according to any of previous claims, wherein the first board (10) is attached to the second board (1) by means of an adhesive.

6. A heating wall panel comprising a plasterboard, **characterized in that** it is formed by a heating water line (2) arranged in two layers in a shape of a meander, so that its successive sections are parallel to each other, wherein the first layer of the heating line (2) is arranged more densely than the second layer, and between the layers there is an upper electrical installation duct (3) and a lower electrical installation duct (4) parallel to the upper electrical installation duct (3), wherein the ends of the heating line (2) are fixed to tees (5) and (6), located one above another, to which a cold water line (8) of a heating system and a hot water line (9) of the heating system are connected, wherein the heating line (2), the upper electrical installation duct (3), the lower electrical installation duct (4), the tees (5), (6) are entirely embedded in a PIR-type insulation board (10) and flush with its surface, wherein the PIR-type insulation board (10) is permanently bonded by means of an adhesive with the plasterboard (1) having dimensions corresponding to the dimensions of the PIR-type insulation board (10), wherein the plasterboard (1) has, in its lower part on both sides, inspection hatches (7A, 7B) milled on the edges, while the indentations (11) of the board surface (1) along the two edges of the hatches enable their disassembly in the event of a failure, and the millings and cuts (12) along the longer edges of the board (1) allow the panel to be adjusted to wall bends.

7. The heating wall panel according to claim 6, **characterized in that** the upper electrical installation duct (3), the lower electrical installation duct (4), the cold water line (8) of a heating system and the hot water line (9) of the heating system are located in the PIR type insulation board (10) in parallel to each other and to its shorter edge, wherein the cold water line (8) of the heating system is located at a distance (h1) equal to 100 mm from the lower shorter edge, and the upper electrical installation duct (3) is located at a distance (h3) equal to 1100 mm from the lower shorter edge.

8. The heating wall panel according to claim 6 or 7 **characterized in that** the distances (h5) between the sections of the first layer of the heating line (2) are equal to each other and are equal to 100 mm.

## Patentansprüche

1. Heizungswandpaneel, umfassend:
- eine erste Platte (10);
- eine zweite Platte (1), die an die erste Platte (10) angrenzt;
- wobei innerhalb der ersten Platte (10) installiert sind:
- eine Heizungsleitung (2), die in zwei Schichten (2A, 2B) auf eine koplanare Weise mit zwei Außenflächen der ersten Platte (10) eingerichtet ist, wobei die Heizungsleitung (2) in der ersten Schicht (2A) in einer Form einer Windung eingerichtet ist und eine Länge aufweist, die größer als in der zweiten Schicht (2B) ist;
- eine Kaltwasserleitung (8) und eine Heißwasserleitung (9), die übereinander eingerichtet sind und mittels T-Stücken (5, 6) an Enden der Heizungsleitung (2) befestigt sind; und
- einen oberen Elektroinstallationskanal (3) und einen unteren Elektroinstallationskanal (4), die sich von einer ersten Seite zu einer zweiten Seite der ersten Platte (10) zwischen der ersten Schicht (2A) und der zweiten Schicht (2B) der Heizungsleitung (2) erstrecken;
- und wobei die zweite Platte (1) umfasst:
- in dem unteren Teil der zweiten Platte (1) an den Seiten der zweiten Platte (1) Inspektionsluken (7A, 7B) mit einer Form von Plattenfragmenten, die von dem Rest der Plattenfläche durch Lukenvertiefungen (11) abgegrenzt sind, die in der Fläche der zweiten Platte (1), die an die erste Platte (10) angrenzt, hergestellt sind; und
- in einem Abstand (d) von den längeren Kanten der zweiten Platte (1) und parallel zu den längeren Kanten der zweiten Platte (1) Seitenvertiefungen (12), die in der Fläche der zweiten Platte (1), die an die erste Platte (10) angrenzt, hergestellt sind.

2. Heizungswandpaneel nach Anspruch 1, wobei die erste Platte (10) eine Polyisocyanuratplatte (PIR-Platte) ist.

3. Heizungswandpaneel nach Anspruch 1 oder 2, wobei die zweite Platte (1) eine Gipskartonplatte ist.

4. Heizungswandpaneel nach einem der vorhergehenden Ansprüche, wobei einzelne Schlaufen der Heizungsleitung (2) gerade Abschnitte aufweisen, die parallel zu der kürzeren Kante des Paneels verlaufen.

5. Heizungswandpaneel nach einem der vorhergehenden Ansprüche, wobei die erste Platte (10) mittels eines Klebstoffs an der zweiten Platte (1) angebracht ist.

6. Heizungswandpaneel, umfassend eine Gipskartonplatte, **dadurch gekennzeichnet, dass** es von einer Heizungswasserleitung (2) gebildet wird, die in zwei Schichten in einer Form einer Windung eingerichtet ist, so dass seine aufeinanderfolgenden Abschnitte parallel zueinander sind, wobei die erste Schicht der Heizungsleitung (2) dichter als die zweite Schicht eingerichtet ist, und zwischen den Schichten ein oberer Elektroinstallationskanal (3) und ein unterer Elektroinstallationskanal (4), der parallel zu dem oberen Elektroinstallationskanal (3) ist, vorliegen, wobei die Enden der Heizungsleitung (2) an T-Stücken (5) und (6), die übereinander angeordnet sind, befestigt sind, mit denen eine Kaltwasserleitung (8) eines Heizsystems und eine Heißwasserleitung (9) des Heizsystems verbunden sind, wobei die Heizungsleitung (2), der obere Elektroinstallationskanal (3), der untere Elektroinstallationskanal (4), die T-Stücke (5), (6) vollständig in eine Dämmplatte (10) vom PIR-Typ eingebettet sind und mit seiner Fläche bündig sind, wobei die Dämmplatte (10) vom PIR-Typ mittels eines Klebstoffs mit der Gipskartonplatte (1), die Abmessungen aufweist, die den Abmessungen der Dämmplatte (10) vom PIR-Typ entsprechen, dauerhaft verklebt ist, wobei die Gipskartonplatte (1) in ihrem unteren Teil auf beiden Seiten Inspektionsluken (7A, 7B) aufweist, die an den Kanten gefräst sind, während die Vertiefungen (11) der Plattenfläche (1) entlang der zwei Kanten der Luken ihre Demontage im Fall eines Defekts ermöglichen und die Fräsbearbeitungen und Schnitte (12) entlang der längeren Kanten der Platte (1) ermöglichen, das Paneel an Wandbiegungen anzupassen.

7. Heizungswandpaneel nach Anspruch 6, **dadurch gekennzeichnet, dass** der obere Elektroinstallationskanal (3), der untere Elektroinstallationskanal (4), die Kaltwasserleitung (8) eines Heizsystems und die Heißwasserleitung (9) des Heizsystems in der Dämmplatte (10) vom PIR-Typ parallel zueinander und zu seiner kürzeren Kante angeordnet sind, wobei die Kaltwasserleitung (8) des Heizsystems in einem Abstand (h1), der gleich 100 mm ist, von der unteren kürzeren Kante angeordnet ist und der obere Elektroinstallationskanal (3) in einem Abstand (h3), der gleich 1100 mm ist, von der unteren kürzeren Kante angeordnet ist.

8. Heizungswandpaneel nach Anspruch 6 oder 7, **dadurch gekennzeichnet, dass** die Abstände (h5) zwischen den Abschnitten der ersten Schicht der Heizungsleitung (2) zueinander gleich sind und gleich 100 mm sind.

## Revendications

1. Panneau de mur chauffant comprenant :
- une première plaque (10) ;
- une seconde plaque (1) adjacente à la première plaque (10) ;
- à l'intérieur de la première plaque (10) étant installés :
- une conduite de chauffage (2) disposée en deux couches (2A, 2B) de manière coplanaire avec deux surfaces externes de la première plaque (10), ladite conduite de chauffage (2) dans la première couche (2A) étant disposée sous la forme d'un méandre et présentant une longueur supérieure à celle de la seconde couche (2B) ;
- une conduite d'eau froide (8) et une conduite d'eau chaude (9) disposées l'une au-dessus de l'autre et fixées au moyen de tés (5, 6) aux extrémités de la conduite de chauffage (2) ; et
- un conduit d'installation électrique supérieur (3) et un conduit d'installation électrique inférieur (4) s'étendant d'un premier côté à un second côté de la première plaque (10) entre la première couche (2A) et la seconde couche (2B) de la conduite de chauffage (2) ;
- et ladite seconde plaque (1) comprenant :
- dans la partie inférieure de la seconde plaque (1) sur les côtés de la seconde plaque (1), des trappes de visite (7A, 7B) présentant une forme de fragments de plaque délimités du reste de la surface de la plaque par des indentations de trappe (11) réalisées dans la surface de la seconde plaque (1) qui est adjacente à la première plaque (10) ; et
- à une distance (d) des bords plus longs de la seconde plaque (1) et parallèlement aux bords plus longs de la seconde plaque (1), des indentations latérales (12) pratiquées dans la surface de la seconde plaque (1) qui est adjacente à la première plaque (10).

2. Panneau de mur chauffant selon la revendication 1, ladite première plaque (10) étant une plaque de polyisocyanurate (PIR).

3. Panneau de mur chauffant selon la revendication 1 ou 2, ladite seconde plaque (1) étant une plaque de plâtre.

4. Panneau de mur chauffant selon l'une quelconque des revendications précédentes, les boucles individuelles de la conduite de chauffage (2) présentant des sections droites s'étendant parallèlement au bord plus court du panneau.

5. Panneau de mur chauffant selon l'une quelconque des revendications précédentes, ladite première plaque (10) étant fixée à la seconde plaque (1) au moyen d'un adhésif.

6. Panneau de mur chauffant comprenant une plaque de plâtre, **caractérisé en ce qu'**il est formé par une conduite d'eau de chauffage (2) disposée en deux couches sous la forme d'un méandre, de sorte que ses sections successives soient parallèles les unes aux autres, ladite première couche de la conduite de chauffage (2) étant disposée de manière plus dense que la seconde couche, et entre lesdites couches se trouvant un conduit d'installation électrique supérieur (3) et un conduit d'installation électrique inférieur (4) parallèle au conduit d'installation électrique supérieur (3), lesdites extrémités de la conduite de chauffage (2) étant fixées à des tés (5) et (6), situés l'un au-dessus de l'autre, auxquels sont reliées une conduite d'eau froide (8) d'un système de chauffage et une conduite d'eau chaude (9) du système de chauffage, ladite conduite de chauffage (2), ledit conduit d'installation électrique supérieur (3), ledit conduit d'installation électrique inférieur (4), lesdits tés (5), (6) étant entièrement incorporés dans une plaque d'isolation de type PIR (10) et affleurant sa surface, ladite plaque d'isolation de type PIR (10) étant collée de manière permanente au moyen d'un adhésif à la plaque de plâtre (1) présentant des dimensions correspondant aux dimensions de la plaque d'isolation de type PIR (10), ladite plaque de plâtre (1) présentant, dans sa partie inférieure de part et d'autre, des trappes de visite (7A, 7B) fraisées sur les bords, tandis que les indentations (11) de la surface de la plaque (1) le long des deux bords des trappes permettent leur démontage en cas de défaillance, et les fraisages et découpes (12) le long des bords plus longs de la plaque (1) permettent d'ajuster le panneau aux courbures du mur.

7. Panneau mural chauffant selon la revendication 6, **caractérisé en ce que** le conduit d'installation électrique supérieur (3), le conduit d'installation électrique inférieur (4), la conduite d'eau froide (8) d'une installation de chauffage et la conduite d'eau chaude (9) du système de chauffage sont situés dans la plaque d'isolation de type PIR (10) parallèlement les uns aux autres et à son bord plus court, ladite conduite d'eau froide (8) du système de chauffage étant située à une distance (h1) égale à 100 mm à partir du bord inférieur plus court, et ledit conduit d'installation électrique supérieur (3) étant situé à une distance (h3) égale à 1100 mm du bord inférieur plus court.

8. Panneau de mur chauffant selon la revendication 6 ou 7 **caractérisé en ce que** les distances (h5) entre les sections de la première couche de la conduite de chauffage (2) sont égales les unes aux autres et sont égales à 100 mm.
